# EUROPEAN PATENT SPECIFICATION

(11) **EP 0 540 122 B1**
(45) Date of publication and mention of the grant of the patent: **10.04.1996**
(21) Application number: 92203328.7
(22) Date of filing: 28.10.1992
(51) Int. Cl.: C08C 19/08, C08C 19/02

(54) **Depolymerization of conjugated diene polymers**
Depolymerisation von konjugierten Dienpolymeren
Dépolymérisation de polymères de diènes conjugués

(30) Priority: 30.10.1991 US 785114
(43) Date of publication of application: 05.05.1993
(73) Proprietor: SHELL INTERNATIONALE RESEARCH MAATSCHAPPIJ B.V., NL-2596 HR Den Haag (NL)
(72) Inventor: Gibler, Carma Joleen, Houston, Texas 77079 (US); Chamberlain, Linda Rae, Richmond, Texas 77469 (US); Kemp, Richard Alan, Stafford, Texas 77477 (US); Wilson, Stanley Edward, Houston, Texas 77084 (US)

(56) References cited:
- EP-A- 0 434 469
- CHEMICAL ABSTRACTS, vol. 114, no. 18, 1990, Columbus, Ohio, US; abstract no. 166108p, 'CATALYSTS AND PROCESS FOR HYDROGENATION OF POLYMERS CONTAINING OLEFINIC DOUBLE BONDS'
- DATABASE WPIL Week 8742, Derwent Publications Ltd., London, GB; AN 87-296468

## Description

This invention relates to the degradation of conjugated diene polymers or copolymers to lower molecular weight materials.

More particularly, the invention relates to the use of certain zirconium compounds in the degradation of such polymers.

Polymers of conjugated dienes and/or block copolymers of vinyl aromatic hydrocarbons and conjugated dienes are well known and have been used for many years for many purposes. Such polymers, particularly if saturated, are relatively stable materials. Thus, it would be advantageous to provide a means to break down or degrade these polymers more quickly than by natural means if necessary. This may be useful for rubber waste management, to produce precursor polymers to undergo further reactions such as functionalization or to prepare a polymer "blend" having certain unique properties.

From Chemical Abstracts, vol. 114, no. 18, 1990, Columbus, Ohio, U.S.A., abstract no. 166108 p, Catalysts and process for hydrogenation of polymers contacting olefinic double bonds", referring to JP-A-2172 537, was known a process for the hydrogenation of unsaturated polymers, by using a component selected from bis(cyclopentadienyl) titanium compounds, bis(cyclopentadienyl)zirconium compounds and bis(cyclopentadienyl)hafnium compounds, in combination with a reducible organometallic compound, such as Et₂ AlCl, and with an olefin, such as cyclohexene.

However, no reference was made to any depolymerization of conjugated diene polymers.

From Japanese patent application JP 62-209103 was known a process for hydrogenation of polymer, which contains olefinic unsaturation by contacting said polymer, in an inert organic solvent, with hydrogen in the presence of a catalyst, compounded of:
(A) at least 1 species of bis(cyclopentadienyl)zirconium compound of the formula (C₅H₅)₂ Zr R R', wherein R and R' represent a C₁-C₁₂ hydrocarbon radical, aryloxy, alkoxy, halogen or carbonyl and wherein R and R' could be the same or different; and
(B) at least 1 species of a compound of lithium, sodium, potassium, aluminium, zinc or magnesium, having reducing power, with the zirconium:reducing metal molar ratio being in the range of from 1:07 to 1:15, whereby the olefinic unsaturated double bonds in the said polymer were hydrogenated.

Component B was preferably n-butyllithium and/or triethylaluminium.

However, no reference was made to any depolymerization of conjugated diene polymers.

From European patent application no. 0434.469 A2 were known a hydrogenation catalyst composition and a process for hydrogenating olefinically unsaturated polymer using the same. The hydrogenation catalyst composition comprised as essential components:
(a) at least one bis(cyclopentadienyl) transition metal compound represented by the formula:

   (C₅H₅)₂ M¹ R¹ R², and
(b) at least one member selected from the group consisting of complex compounds represented by general formulas:

   M²(AlR³R⁴R⁵R⁶) or M²(Mg R³ R⁴ R⁶),

   and further comprising, if necessary,
(c) at least one polar compound selected from the group consisting of ether compounds thioether compounds, ketone compounds, sulfoxide compound, carboxylic acid ester compounds, lactone compounds, amine compounds, amide compounds, nitrile compounds and oxime compounds, and/or
(d) an alkali compound of formula

   M²OR⁷
Herein, M¹ was at least one transition metal selected from titanium, zirconium and hafnium, R¹ and R² could be the same or different and represented alkyl groups, aryl groups, or alkyl groups, alkoxy groups, aryloxy groups, carboxyl groups, carbonyl groups, B-diketone ligands or halogen atoms.

M² was selected from the group consisting of lithium, sodium and potassium, R³ was an alkyl group, an aryl group or an aralkyl group, R⁴ was an alkyl group, an aryl group, an aralkyl group or a halogen atom, R⁵ was a halogen atom, and R⁶ was an alkyl group, an aryl group, an aralkyl group, an alkoxy group or an aryloxy group.

Again, there is no suggestion at all of any possible depolymerization of conjugated diene polymers.

The present invention relates to a process for depolymerization (degradation) of the conjugated diene polymer, carried out in the presence of at least one bis(cyclopentadienyl)zirconium compound of the formula: 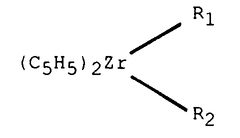
wherein R₁ and R₂ are the same or different and are selected from the group consisting of hydrogen and halogen, at a temperature from 60 to 90°C, a hydrogen partial pressure from 8 to 52.7 bar (750 psig), and a catalyst concentration from 0.01 to 20 mmol zirconium per 100g of polymer, and the contacting takes place for a period of time from 15 to 360 minutes.

The degradation step may be carried out in the presence of a promoter such as lithium hydride.

As is well known, polymers containing ethylenic unsaturation or both aromatic and ethylenic unsaturation can be prepared by copolymerizing one or more polyolefins, particularly a diolefin, by themselves or with one or more alkenyl aromatic hydrocarbon monomers. The polymers may, of course, be random, tapered, block or a combination of these, as well as linear, star or radial.

As is well known, polymers containing ethylenic unsaturation or both aromatic and ethylenic unsaturation may be prepared using anionic initiators or polymerization catalysts, e.g. organolithium compounds. Such polymers may be prepared using bulk, solution or emulsion techniques. In any case, the polymer containing at least ethylenic unsaturation will, generally, be recovered as a solid such as a crumb, a powder, a pellet or the like. Polymers containing ethylenic unsaturation and polymers containing both aromatic and ethylenic unsaturation are commercially available.

In general, when solution anionic techniques are used, conjugated diene polymers and copolymers of conjugated dienes and alkenyl aromatic hydrocarbons are prepared by contacting the monomer or monomers to be polymerized simultaneously or sequentially with an anionic polymerization initiator, such as organolithium compounds. The solvent to be used may be any of the solvents known in the prior art to be useful in anionic polymerization. Examples of suitable solvents, are hydrocarbons such as pentane, hexane, cyclopentane, cyclohexane and the like, optionally mixed with a modifier or randomizer solvent such as an ether or tertiary amine.

Conjugated dienes which may be polymerized anionically include those containing from 4 to 12 carbon atoms, such as 1,3-butadiene, isoprene, piperylene, methylpentadiene, phenylbutadiene, 3,4-dimethyl-1,3-hexadiene, 4,5-diethyl-1,3-octadiene and the like. Conjugated dienes containing from 4 to 8 carbon atoms are preferred for use in such polymers. Alkenyl aromatic hydrocarbons which may be copolymerized include vinyl aryl compounds such as styrene, various alkyl-substituted styrenes, alkoxy-substituted styrenes, 2-vinyl pyridine, 4-vinyl pyridine, vinyl naphthalene, alkyl-substituted vinyl naphthalenes and the like.

Conjugated diene-alkenyl aromatic copolymers which may be used in the present invention include those copolymers described in U.S. Patents Nos. 3,135,716; 3,150,209; 3,496,154; 3,498,960; 4,145,298 and 4,238,202. Conjugated diene-alkenyl aromatic hydrocarbon copolymers which may be used in this invention also include block copolymers such as those described in U.S. Patent Nos. 3,231,635; 3,265,765 and 3,322,856.

Polymers which may be treated in accordance with this invention also include coupled and radial block copolymer such as those described in U.S. Patent Nos. 4,033,888; 4,077,893; 4,141,847; 4,391,949 and 4,444,953.

Other types of polymers may also be depolymerized with the process of the present invention. These include any polymers that contain olefinic unsaturation such as random styrene-butadiene polymers.

When the polymerization is complete, it is advantageous to terminate the living polymer to prevent it from reacting during further processing. This termination can be carried out by the use of alcohols. More recently, it has been found that hydrogen can be used to provide an improved means for terminating the living polymer. When this improvement is used, the problems of using alcohol, i.e. the formation of lithium alkoxides and excess alcohol impurities, are avoided. These impurities can be dertrimental to solvent recycle streams, waste streams and potentially cause product performance problems.

As stated above, the degradation process is carried out in the presence of a bis(cyclopentadienyl)zirconium compound of the formula: 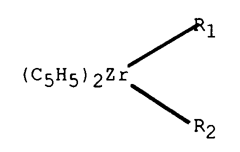
wherein R₁ and R₂ are the same or different and are selected from the group consisting of hydrogen or halogen.

Specific bis(cyclpentadienyl) compounds which may be used in the present invention include bis(cyclopentadienyl)zirconium dichloride, bis(cyclopentadienyl)zirconium dihydride, bis(cyclopentadienyl)zirconium hydridochloride, bis(cyclopentadienyl)-zirconium dibromide, bis(cyclopentadienyl)zirconium diiodide, bis(cyclopentadienyl)zirconium difluoride and mixtures thereof. The preferred zirconium compound is bis(cyclopentadienyl)zirconium dichloride because of ease of handling, relative insensitivity to air and moisture, low cost and commercial availability.

This proces will degrade these polymers to low molecular weight polystyrene and diene polymers without hydrogenating them to any significant degree. Degradation of greater than 80% is easily obtained and it has been found that degradation of almost 100% can be achieved. In some cases, it may be necessary to use a promoter to increase the degradation. Such promoters include alkyl metal compounds, such as lithium hydride. Lithium hydride is preferred because it is more reactive with the zirconium compounds which results in faster and more complete degradation and it is easily formed during hydrogen termination of the polymerized living ends.

In general, the degradation is carried out in a suitable solvent at a temperature within the range of from 60°C to 90°C, and at a hydrogen partial pressure within the range from 8 bar to 52.7 bar (750 psig), preferably from 8 to 16 bar (100 to 200 psig) . Catalyst concentrations within the range from 0.01 mmol (millimoles) per 100 grams of polymer to 20 mmol per 100 grams of polymer, preferably 0.04 to 1 mmol catalyst per 100 grams of polymer, are generally used and contacting at degradation conditions is generally continued for a period of time within the range from 30 to 360 minutes. Suitable solvents for degradation include, among others, n-heptane, n-pentane, tetrahydrofuran, cyclohexane, toluene, hexane and benzene. Because of the small amount of catalyst present in the polymer after degradation, it is not necessary to separate the catalyst and catalyst residue from the polymer after degradation. However, if separation is desired, it may be carried out using methods well known in the prior art. The degradation may be carried out in other manners such as batch processes, continuous processes, and semi-continuous processes. The catalyst and promoters may also be mixed with the solvent-free polymer by grinding or other methods, then exposed to hydrogen gas and heat to degrade the polymer.

### Examples

Polystyrene-polybutadiene-polystyrene and polyisoprene-polystyrene block copolymers were produced via anionic polymerization and terminated with either methanol or hydrogen. In the case of hydrogen termination, lithium hydride is formed. In the case of methanol termination, lithium methoxide is formed. In some cases, a promoter (sec-butyllithium) was added to the polymer solution. The reactor was pressured up to a pressure between 35.5 and 53 bar (500 and 750 psig) hydrogen pressure or 5 bar (60 psig) nitrogen pressure. The zirconium catalyst was added to the polymer solution and the temperatures were controlled between 40-90 °C. After reaction times of 180-250 minutes, the polymer solutions were analyzed by ozone titration of the carbon-carbon double bonds and then by gel permeation chromatography (GPC). The ozone titration results indicated that the polymers were degraded because the double bond concentration decreased. Degradation of the polymer into low molecular weight diene and polystyrene species was determined by the GPC and confirmed by the absence of the main peak characteristic of the block copolymer. If only the concentration of the carbon-carbon double bonds were monitored, then the results could be incorrectly interpreted as hydrogenation of the polymer since a decrease in carbon-carbon double bonds also occurs during hydrogenation. The molecular integrity of the polymer is retained during hydrogenation.

### Method A Preparation of Hydrogen-Terminated S-B-S Polymer having a Molecular Weight of 44,100.

A 272 kg (600 lb) batch of polystyrene-polybutadiene-polystyrene (S-B-S-Li+) block copolymer having a molecular weight of 44,100 was made by anionic polymerization using sec-butyllithium as the initiator in a 568 litre (150 gallon) pressurized reactor. The polymerization took place in a mixture of cyclohexane and diethyl ether. The resulting polymer solution contained 20% polymer by weight. At the end of the polymerization reaction, the reactor was sparged with hydrogen and vigorously mixed for approximately 15 minutes to terminate the polymer and form a lithium hydride by-product.

### Method B Preparation of Hydrogen-Terminated S-B-S Polymer having a Molecular Weight of 58,000.

A 272 kg (600 lb) batch of polystyrene-polybutadiene-polystyrene (S-B-S-Li+) block copolymer having a molecular weight of 58,000 was made by anionic polymerization using sec-butyllithium as the initiator in a 568 litre (150 gallon) pressurized reactor. The polymerization took place in a mixture of cyclohexane and diethyl ether. The resulting polymer solution contained 20% polymer by weight. At the end of the polymerization reaction, the reactor was sparged with hydrogen and vigorously mixed for approximately 30 minutes to terminate the polymer and form a lithium hydride by-product.

### Method C Preparation of Methanol-Terminated S-B-S Polymer having a Molecular Weight of 55,600.

A 272 kg (600 lb) batch of polystyrene-polybutadiene-polystyrene (S-B-S-Li+) block copolymer having a molecular weight of 55,600 was made by anionic polymerization using sec-butyllithium as the initiator in a 568 litre (150 gallon) pressurized reactor. The polymerization took place in a mixture of cyclohexane and diethyl ether. The resulting polymer solution contained 20% polymer by weight. At the end of the polymerization reaction, the polymer was terminated with a 1.35 molar ratio of methanol:Li which produced lithium methoxide and residual methanol in the polymer solution.

### Method D Preparation of Methanol-Terminated I-S Polymer having a Molecular Weight of 97,600.

A 272 kg (600 lb) batch of polyisoprene-polystyrene (I-S-Li+) block copolymer having a molecular weight of 97,600 was made by anionic polymerization using sec-butyllithium as the initiator in a 568 litre (150 gallon) pressurized reactor. The polymerization took place in cyclohexane and the resulting polymer solution contained 15% polymer by weight. At the end of the polymerization reaction, a 1.33 methanol:Li molar ratio was added to the polymer solution which produced lithium methoxide and excess methanol in the polymer solution.

### Example 1 Degradation Using Cp₂ZrCl₂ Catalyst in Hydrogen Atmosphere.

A hydrogen-terminated polystyrene-polybutadiene-polystyrene type polymer having a molecular weight of 44,100 was prepared by Method A. Approximately 1560 g of the 20% polymer by weight solution containing LiH was pressure-transferred to a 4-litre reactor. The temperature of the reactor was maintained at 80 °C. The reactor was pressurized to 35.5 bar (500 psig) with hydrogen gas. At this time, 0.0025 g-moles of the bis(cyclopentadienyl)zirconium dichloride (Cp₂ZrCl₂) was added to the reactor as a cyclohexane slurry. The reaction was allowed to run for 180 minutes. Gel permeation chromatography (GPC) was done on the final samples and 100% of the polymer had degraded into much lower weight diene and polystyrene blocks distributed around the peak molecular weight of 6400.

### Comparative Example 1 Degradation Using Cp₂ZrCl₂ Catalyst in Nitrogen Atmosphere.

A hydrogen-terminated polystyrene-polybutadiene-polystyrene type polymer having a molecular weight of 58,000 was prepared by Method B. Approximately 1560 g of the 20% polymer containing LiH by weight solution was pressure-transferred to a 4-litre reactor. The temperature of the reactor was maintained at 80 °C. The reactor was pressurized to 5 bar (60 psig) with nitrogen gas. At this time, 0.0025 g-moles of the bis(cyclopentadienyl)zirconium dichloride (Cp₂ZrCl₂) was added to the reactor as a cyclohexane slurry. The reaction was allowed to run for 180 minutes. Ozone titration results showed that degradation was 0%. Gel permeation chromatography (GPC) was done on the final samples and less than 20% of the polymer had degraded. Comparison of Comparative Example 1 with Example 1 shows that a hydrogen atmosphere promotes degradation of the polymer versus an inert (nitrogen) atmosphere.

### Example 2 Degradation Using Cp₂ZrHCl Catalyst in Hydrogen Atmosphere.

A methanol-terminated polystyrene-polybutadiene-polystyrene type polymer having a molecular weight of 55,600 was prepared by Method C. Approximately 390 g of the 20% polymer by weight solution and 1170 g of cyclohexane were pressure-transferred to a 4-litre reactor. The resulting solution was 5% polymer by weight. The solution was sparged with hydrogen for approximately one hour. Sec-butyllithium (0.0702 g-moles) was added to the solution. The initial temperature was 40 °C and the hydrogen pressure was raised to 53 bar (750 psig). At this time, 0.0061 g-moles of the catalyst, bis(cyclopentadienyl)zirconium hydridochloride (Cp₂ZrHCl), was added. Immediately following catalyst addition, the temperature was raised to 60 °C. The temperature was raised to 80 °C after 30 minutes of reaction. At 90 minutes of reaction, the temperature was raised to 90 °C. The total reaction time was 180 minutes. Ozone titration showed that 49.4% of the double bonds degraded. Gel permeation chromatography (GPC) was done on the final samples and 85% of the polymer had degraded.

### Example 3 Degradation Using Cp₂ZrH₂ Catalyst in Hydrogen Atmosphere.

A methanol-terminated polystyrene-polybutadiene-polystyrene type polymer having a molecular weight of 55,600 was prepared by Method C. Approximately 390 g of the 20% polymer by weight solution and 1170 g of cyclohexane were pressure-transferred to a 4-litre reactor. The resulting solution was 5% polymer by weight. The solution was sparged with hydrogen for approximately one hour.

The initial temperature was 40 °C and the hydrogen pressure was raised to 53 bar (750 psig). At this time, 0.0027 g-moles of the catalyst, bis(cyclopentadienyl)zirconium dihydride (Cp₂ZrH₂), was added. Immediately following catalyst addition, the temperature was raised to 60 °C. The temperature was raised to 80 °C after 30 minutes of reaction. At 90 minutes of reaction, the temperature was raised to 90 °C. The total reaction time was 250 minutes. Ozone titration showed that 89.1% of the double bonds degraded. Gel permeation chromatography (GPC) was done on the final samples and 100% of the polymer had degraded.

### Example 4 Degradation Using Cp₂ZrHCl Catalyst in Hydrogen Atmosphere.

A methanol-terminated polyisoprene-polystyrene type polymer having a molecular weight of 97,600 was prepared by Method D. Approximately 520 g of the 15% polymer by weight solution and 1040 g of cyclohexane were pressure-transferred to a 4-litre reactor. The resulting solution was 5% polymer by weight. The solution was sparged with hydrogen for approximately one hour. The initial temperature was 40 °C and the hydrogen pressure was raised to 53 bar (750 psig). At this time, 0.0014 g-moles of the catalyst, bis(cyclopentadienyl)zirconium hydridochloride (Cp₂ZrHCl), was added. Immediately following catalyst addition, the temperature was raised to 60 °C. The temperature was raised to 80 °C after 30 minutes of reaction. At 90 minutes of reaction, the temperature was raised to 90 °C. The total reaction time was 180 minutes. Ozone titration showed that 16.5% of the double bonds degraded. Gel permeation chromatography (GPC) was done on the final samples and less than 20% of the polymer had degraded. This catalyst was effective in Example 2 when used with a sec-butyllithium promoter.

### Example 5 Degradation Using Cp₂ZrH₂ Catalyst in Hydrogen Atmosphere.

A methanol-terminated polyisoprene-polystyrene type polymer having a molecular weight of 97,600 was prepared by Method D. Approximately 520 g of the 15% polymer by weight solution and 1040 g of cyclohexane were pressure-transferred to a 4-litre reactor. The solution was sparged with hydrogen for approximately one hour.

The initial temperature was 40 °C and the hydrogen pressure was raised to 53 bar (750 psig). At this time, 0.0014 g-moles of the catalyst, bis(cyclopentadienyl)zirconium dihydride (Cp₂ZrH₂), was added. Immediately following catalyst addition, the temperature was raised to 60 °C. The temperature was raised to 80 °C after 30 minutes of reaction. At 90 minutes of reaction, the temperature was raised to 90 °C. The total reaction time was 180 minutes. Ozone titration showed that 29.4% of the double bonds degraded. Gel permeation chromatography (GPC) was done on the final samples and 100% of the polymer had degraded.

Others have used zirconium catalysts and claimed good hydrogenation results. We have found that this is not the case. We believe the confusion involves the interpretation of the disappearance of the carbon-carbon double bonds. In hydrogenation, carbon-carbon double bonds disappear due to saturation of these carbon-carbon bonds with hydrogen. In degradation, carbon-carbon double bonds disappear because the bonds are broken as the polymer molecules are fragmented or degraded. Methods to monitor the disappearance of these double bonds are employed in hydrogenation. This includes IR or NMR or ozone titration. If only the disappearance of double bonds were monitored, then the hydrogenation could be incorrectly concluded. Rather, degradation probably occurred.

During the evaluation of these Zr catalysts, ozone titration of the carbon-carbon double bond was the lab-scale method to monitor hydrogenation. As can be seen from the following table, it appears that hydrogenation of the polymer occurred:

**Table 1**

| | |
|---|---|
| Comparative Example 1: | 0% conversion |
| Example 2: | 49.4% conversion |
| Example 3: | 89.1% conversion |
| Example 4: | 16.5% conversion |
| Example 5: | 29.4% conversion |

If this were our only method to determine hydrogenation, we may have incorrectly concluded that hydrogenation, although poor, did occur in most cases. We tried drying the material by solvent casting and discovered that the polymer would not dry in the typical time. It would not dry at longer drying times. This raised our suspicions and we submitted the samples for GPC. GPC showed that the main polymer peak had indeed degraded. The disappearance of the carbon-carbon double bonds was due to degradation, not hydrogenation.

## Claims

1. A process for the degradation of a conjugated diene polymer, which comprises contacting the polymer with hydrogen in the presence of at least one bis(cyclopentadienyl)zirconium compound of the formula: 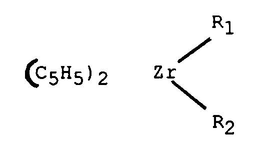 wherein R₁ and R₂ are the same or different and are selected from the group consisting of hydrogen and halogen, at a temperature from 60-90°C, a hydrogen partial pressure from 8 to 52.7 bar, a catalyst concentration from 0.01-20 mmol zirconium per 100g of polymer, and the contacting takes place for a period of time from 15 to 360 minutes.

2. The process according to claim 1 characterised in that a promotor selected from alkyl metal compound and a metal hydride, is used.

3. The process of claims 1 and 2 wherein the promotor is lithium-hydride.

4. The process of claim 1 wherein R₁ and R₂ are selected from the group consisting of hydrogen and chlorine.

5. The process of any one of the claims 1-4, wherein the polymers are copolymers of at least one conjugated diene and at least one vinyl aromatic hydrocarbon.

6. The process according to any of the claims 1-5, wherein the zirconium compound is bis(cyclopentadienyl)zirconium dichloride.

## Patentansprüche

1. Verfahren zum Abbau eines Polymerisats von konjugierten Dienen, bei dem man das Polymerisat in Gegenwart von mindestens einer Bis(cyclopentadienyl)zirkonium-Verbindung der Formel: 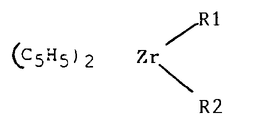 worin R₁ und R₂ gleich oder verschieden und aus der Gruppe, bestehend aus Wasserstoff und Halogen, ausgewählt sind, bei einer Temperatur von 60-90°C, einem Wasserstoffpartialdruck von 8 bis 52,7 bar und einer Katalysatorkonzentration von 0,01-20 mmol Zirkonium pro 100 g Polymerisat mit Wasserstoff in Berührung bringt, wobei die Kontaktzeit 15 bis 360 Minuten beträgt.

2. Verfahren nach Anspruch 1, dadurch gekennzeichnet, daß man einen unter einer Alkylmetallverbindung und einem Metallhydrid ausgewählten Promotor verwendet.

3. Verfahren nach Anspruch 1 und 2, bei dem man als Promotor Lithiumhydrid einsetzt.

4. Verfahren nach Anspruch 1, bei dem man R₁ und R₂ aus der Gruppe, bestehend aus Wasserstoff und Chlor, auswählt.

5. Verfahren nach einem der Ansprüche 1-4, bei dem man als Polymerisate Copolymerisate von mindestens einem konjugierten Dien und mindestens einem vinylaromatischen Kohlenwasserstoff einsetzt.

6. Verfahren nach einem der Ansprüche 1-5, bei dem man als Zirkoniumverbindung Bis(cyclopentadienyl)zirkoniumdichlorid einsetzt.

## Revendications

1. Procédé de dégradation d'un polymère de diène conjugué, caractérisé en ce qu'on met le polymère en contact avec de l'hydrogène en présence d'au moins un composé bis(cyclopentadiényl)zirconium répondant à la formule suivante : 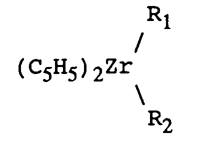 dans laquelle R₁ et R₂ sont identiques ou différents et sont choisis dans le groupe formé par l'atome d'hydrogène et les atomes d'halogènes, à une température de 60 à 90°C, sous une pression partielle d'hydrogène de 8 à 52,7 bars, une concentration en catalyseur de 0,01 à 20 mmoles de zirconium par 100 g de polymère et en ce que la mise en contact a lieu pendant une période qui fluctue de 15 à 360 minutes.

2. Procédé suivant la revendication 1, caractérisé en ce que l'on utilise un promoteur choisi parmi un composé d'alkylmétal et un hydrure de métal.

3. Procédé suivant l'une quelconque des revendications 1 et 2, caractérisé en ce que le promoteur est l'hydrure de lithium.

4. Procédé suivant la revendication 1, caractérisé en ce que R₁ et R₂ sont choisis dans le groupe formé par l'atome d'hydrogène et l'atome de chlore.

5. Procédé suivant l'une quelconque des revendications 1 à 4, caractérisé en ce que les polymères sont des copolymères d'au moins un diène conjugué et d'au moins un hydrocarbure vinylaromatique.

6. Procédé suivant l'une quelconque des revendications 1 à 5, caractérisé en ce que le composé de zirconium est le dichlorure de bis(cyclopentadiényl)zirconium.
